Europäisches Patentamt

(19) European Patent Office

Office européen des brevets

(11) EP 0 875 560 A1

(12) EUROPEAN PATENT APPLICATION
published in accordance with Art. 158(3) EPC

(43) Date of publication:
04.11.1998 Bulletin 1998/45

(21) Application number: 97942255.7

(22) Date of filing: 06.10.1997

(51) Int. Cl.[6]: C12C 7/22

(86) International application number:
PCT/JP97/03563

(87) International publication number:
WO 98/15612 (16.04.1998 Gazette 1998/15)

(84) Designated Contracting States:
DE GB NL

(30) Priority: 07.10.1996 JP 282899/96
09.10.1996 JP 285874/96

(71) Applicant:
SAPPORO BREWERIES LTD.
Tokyo 150 (JP)

(72) Inventors:
• MITANI, Yutaka,
Sapporo Breweries Limited
Yaizu-shi, Shizuoka 425 (JP)
• SUZUKI, Hidekazu,
Sapporo Breweries Limited
Yaizu-shi, Shizuoka 425 (JP)
• OHSHIMA, Toshiyuki,
Sapporo Breweries Limited
Yaizu-shi, Shizuoka 425 (JP)

• KOBAYASHI, Minoru,
Sapporo Breweries Limited
Yaizu-shi, Shizuoka 425 (JP)
• KURIHARA, Toshio,
Sapporo Breweries Limited
Yaizu-shi, Shizuoka 425 (JP)
• AKIYAMA, Hiroshi,
Sapporo Breweries Limited
Yaizu-shi, Shizuoka 425 (JP)
• ISHIDA, Fumito,
Sapporo Breweries Limited
Yaizu-shi, Shizuoka 425 (JP)

(74) Representative:
VOSSIUS & PARTNER
Postfach 86 07 67
81634 München (DE)

(54) METHOD OF BOILING WORT AND WORT BOILER USED THEREFOR

(57) The present invention aims to provide a method of boiling a wort which can improve an efficiency of separation and exhalation of a wort boiling apparatus used to produce beer or malt liquors.

The present invention is to provide a method of boiling a wort which is conducted during a wort producing step in the production of beer or malt liquors, characterized in that a degree of gas-liquid contact between the wort and a gaseous phase inside of a wort boiling apparatus is improved to increase an efficiency of volatilizing and exhaling matters to be volatilized and exhaled from the wort when boiling the wort and to decrease a heat energy required when boiling the wort.

Fig.1

## Description

Technical Field

The present invention relates to a method of boiling a wort which method can improve a separation and exhalation efficiency of a wort boiling apparatus used in the production of beer or malt liquors, and to a wort boiling apparatus for realizing the same.

Technical Background

In a wort producing step in the production of beer, malt liquors and the like, a wort obtained through filtration of a mash is boiled in a wort boiling kettle together with a hop, a spent hop or the like is removed, the resulting liquid is cooled, and then the cold wort is then fed to the next fermentation step.

This step of boiling the wort includes functions of (1) percolation of active ingredients (bitter substance and flavor ingredients) of a hop into a wort, (2) coagulation of a coagulable protein of the wort, (3) deactivation of an enzyme remaining in the wort and sterilization of the wort, and (4) removal of excess water through evaporation and removal of volatile matters which are undesirous to the flavor and taste of beer through volatilization and exhalation.

However, this step of boiling the wort requires a great energy because evaporation and separation of volatile matters from the wort are conducted according to the amount of water in the wort evaporated through the boiling. However, almost no measure to decrease the amount of energy required was taken.

The present inventors have focused on the above-mentioned function (4) in the step of boiling the wort. They have anticipated that not only the concentration through mere evaporation of water but also the evaporation, exhalation and separation of various volatile and non-volatile matters of the wort in combination with the evaporation of water influence the flavor and taste of the product. That is, flavor- and taste-associated volatile matters derived from a wort and a hop are shifted into a gaseous phase in combination with the evaporation of water or on the basis of a gas-liquid equilibrium principle at high temperatures (that is, these are evaporated and separated from the wort). It is anticipated that the amounts of these volatile matters evaporated are related to the water evaporation ratio, greatly influencing the flavor and taste of beer, malt liquors and the like as a product.

These facts agree with the empirical principle that phenomena such as temperature drop of a boiling kettle head space that causes a reflow of a condensation through suction of air from a non-sealed portion or the like and a temperature distribution in the wort, such as the presence of a region where the temperature is lower than a boiling point, do not allow reaching a gas-liquid equilibrium state from being aimed give the undesirable flavor and taste to beer, malt liquors and the like.

Further, as a result of investigations of the present inventors, it has been found that not only volatile matters of a wort but also matters having a higher boiling point than water, for example, non-volatile matters, are decreased for a relatively short period of time when boiling the wort. This is presumably because that a mechanism of exhalation of any dissolved ingredients, other than the evaporation, acts when boiling the wort. In this respect, according to the analysis of the present inventors, when bubbles formed in a wort boiled collapse in contact with gaseous phase, fine droplets are formed in a gaseous phase. The formation of the fine droplets is similar to occurrence of a spray-like mist around bubbles of a soap that collapse. These fine droplets are discharged outside the boiling apparatus along with an upstream of a gaseous phase. The fine droplets contain matters dissolved in a wort, above all, volatile and non-volatile matters that tend to gather in the boundary between the gaseous phase and the liquid phase. Accordingly, the constituting state of wort ingredients is changed depending on the difference in the state when boiling the wort, and it is anticipated that this influences the flavor and taste of beer as a final product.

Therefore, the present inventors have conducted investigations to develop a method that helps to volatilize and exhale matters to be volatilized, exhaled and separated from a wort in boiling the same. Consequently, they have found that the increase in driving force of the gas-liquid equilibrium relationship to activate the ability of gas-liquid exchange allows rapidly separation and removing of the volatile matters, and the bubble generation in the boiling wort to volatilize and exhale both volatile matters and non-volatile matters into a gaseous phase making it possible to reduce an energy required in this step. These findings have led to the completion of the present invention.

Disclosure of the Invention

First, the present invention recited in claim 1 is to provide a method of boiling a wort which is conducted during a wort producing step in the production of beer or malt liquors, characterized in that a degree of gas-liquid contact between the wort and a gaseous phase inside of a wort boiling apparatus is improved to increase an efficiency of volatilizing and exhaling matters to be volatilized and exhaled from the wort when boiling the wort and to decrease a heat energy required when boiling the wort.

The present inventors have focused on the fact that the volatilization and exhalation of dimethyl sulfide (hereinafter abbreviated as "DMS") are conducted through the consecutive procedures of formation of DMS from S-methylmethionine (hereinafter abbreviated as "SMM"), a precursor thereof, by heat reaction, and of volatilization into a gaseous phase, during the boiling of the wort. They have established the equation of the reaction rate in the consecutive procedures, and have inserted therein the measured values of amounts of SMM and DMS formed during the boiling of the wort to calculate the "reaction rate coefficient" and the "volatilization rate coefficient" in each consecutive procedures. Then, they have found that the volatilization rate coefficient among them increases depending on the heat supply rate in the boiling and varies depending on the shape of the boiling apparatus.

That is, as the heat supply rate is increased, the wort in the boiling apparatus flows vigorously, the degree of contact between the wort and the gaseous phase is increased, and the volatile matters from the wort are volatilized and exhaled more easily, thereby increasing the volatilization rate coefficient. Further, even at the same heat supply rate, volatile matters are volatilized and exhaled more easily with a boiling apparatus in which a wort is actively mixed with flowing and the gas-liquid contact is vigorously conducted, increasing the volatilization rate coefficient.

From these facts, it is possible to evaluate the efficiency of volatilization and exhalation of volatile matters of wort boiling procedure or from the wort boiling apparatus by comparison in the volatilization rate coefficient of the volatile matters. However, from the strict viewpoint of the reaction rate, not only is the coefficient of exhalation during the volatilization and exhalation of DMS compared in the evaluation of the efficiency of volatilization and exhalation of DMS, but also is it necessary to consider the formation through conversion from SMM to DMS which is the preceding procedure. However, this formation of DMS tends to be increased chiefly depending on the temperature. Accordingly, in the wort boiling procedure in which the wort remains almost unchanged at the boiling point, almost no change can be observed. Therefore, the volatilization rate coefficient is the first factor through which to determine the efficiency of exhalation. The above-mentioned invention recited in claim 1 is provided on the basis of this evaluation method.

Second, the invention recited in claim 2 is to provide the method recited in claim 1, wherein the amount of the wort flowing through a heat exchange which is mounted within a wort boiling kettle of the wort boiling apparatus for boiling the wort in the kettle through heating is increased to improve the degree of gas-liquid contact between the wort and the gaseous phase within the apparatus.

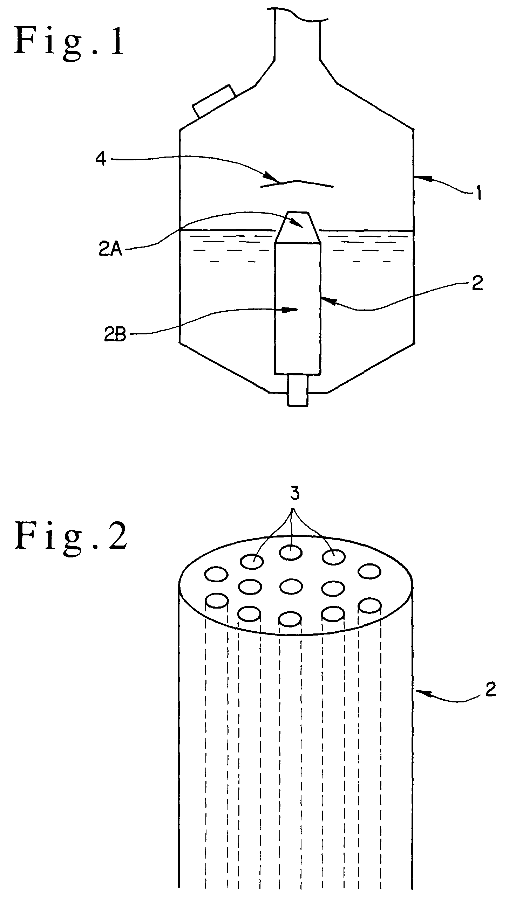

That is, a structure of a wort boiling apparatus is generally as shown in Fig. 1, and a heat exchanger 2 mounted within the apparatus for heating a wort is, as shown in Fig. 2, provided with a plurality of heating tubes 3.

Hot water, a high-temperature steam or a high-temperature hot medium is adapted to pass around the heating tubes 3, whereby a wort filled in the wort boiling apparatus is heated to the boiling point. The wort that has reached its boiling point is bumped by means of the heating tubes 3, and circulated within the apparatus in the order, inside of the kettle → heat exchanger (heating tubes) → spreader 4 → wort liquid level → bottom of the kettle. The spreader 4 is for returning the wort boiled to the wort liquid level.

As a result of the investigations by the present inventors, it has been found that the number of the heating tubes 3 is increased and the length of the tube is shortened (the circulation speed of the above-mentioned wort is raised and the amount of the wort flowing through the heat exchanger is increased without substantially changing the heating area), making it possible to increase the degree of gas-liquid contact of the wort during the boiling. These findings have led to the completion of the present invention recited in claim 2.

Further, the present invention recited in claim 3 is to provide the method recited in calm 1, wherein the wort is boiled while sparging an inert gas to improve the degree of gas-liquid contact between the wort and the gaseous phase in the wort boiling apparatus.

That is, the present inventions recited in claims 2 and 3 are to provide specific means for improving the degree of gas-liquid contact between the wort and the gaseous phase in the wort boiling apparatus in the present invention recited in claim 1.

Still further, the present invention recited in claim 4 is to provide a method of evaluating an evaporation effect of matters to be volatilized and exhaled in boiling a wort in which in the evaluation of the volatilization and exhalation effect of matters to be volatilized and exhaled from the wort by boiling the wort during the wort producing step in the production of beer or malt liquors, the wort is boiled for a predetermined period of time while sparging an inert gas, the composition of remaining matters to be volatilized and exhaled in the wort is inputted into a neural network as a gas chromatogram pattern, this pattern is compared with a gas chromatogram pattern of a composition of remaining volatile matters in the wort boiled without sparging an inert gas which pattern has been inputted in advance and is outputted by being calculated in terms of a time of boiling which is conducted without sparging an inert gas, this time of boiling corresponding to the above-mentioned boiling time, and the evaporation effect of volatile matters provided by sparging the inert gas is evaluated from the length of the boiling time obtained.

Incidentally, as the method of evaluating the boiling through sparge of the inert gas, the method of the comparative evaluation in terms of the volatilization rate coefficient of DMS as explained in the above-mentioned claim 1 can be used.

Further, conversely, the comparative evaluation using the neural network as described in the above-mentioned claim 4 can also be used to evaluate the invention recited in claim 1.

Finally, the present invention recited in claim 5 is to provide a wort boiling apparatus which is used during the wort producing step in the production of beer or malt liquors, characterized in that a means of sparging an inert gas is provided.

Brief Description of Drawings

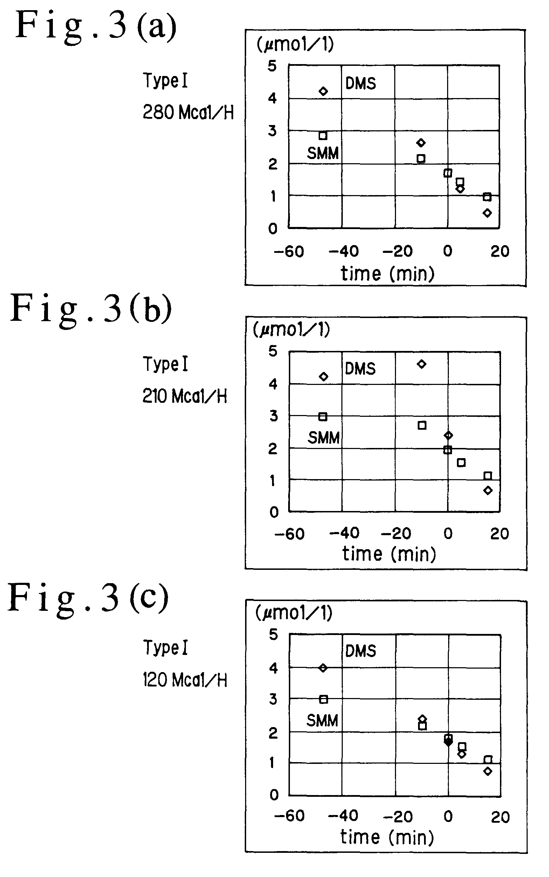

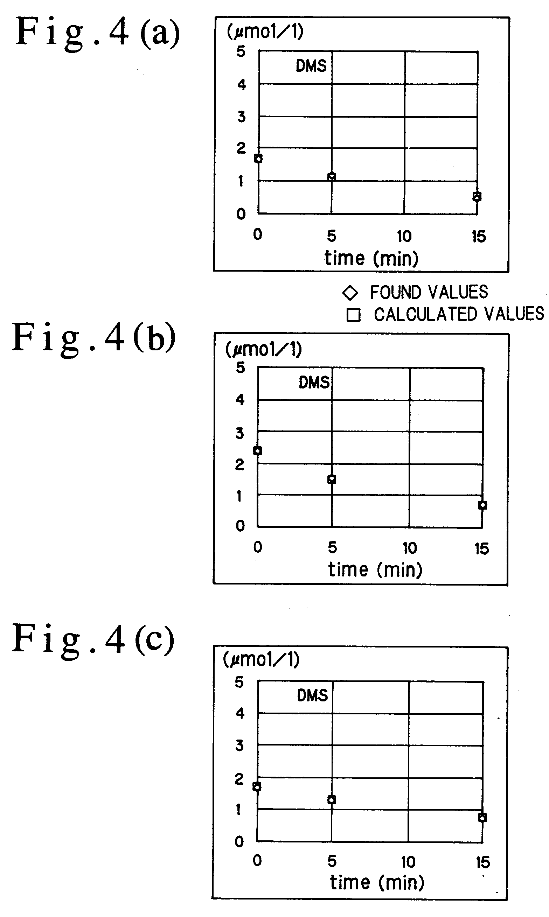

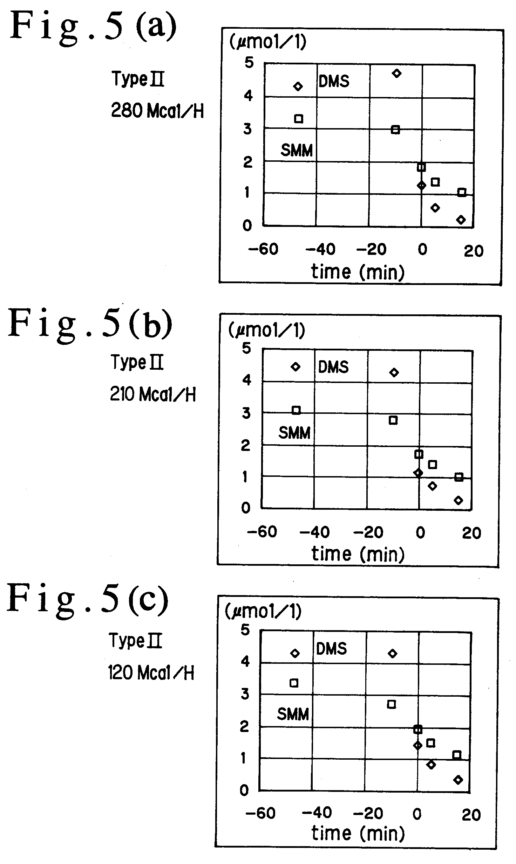

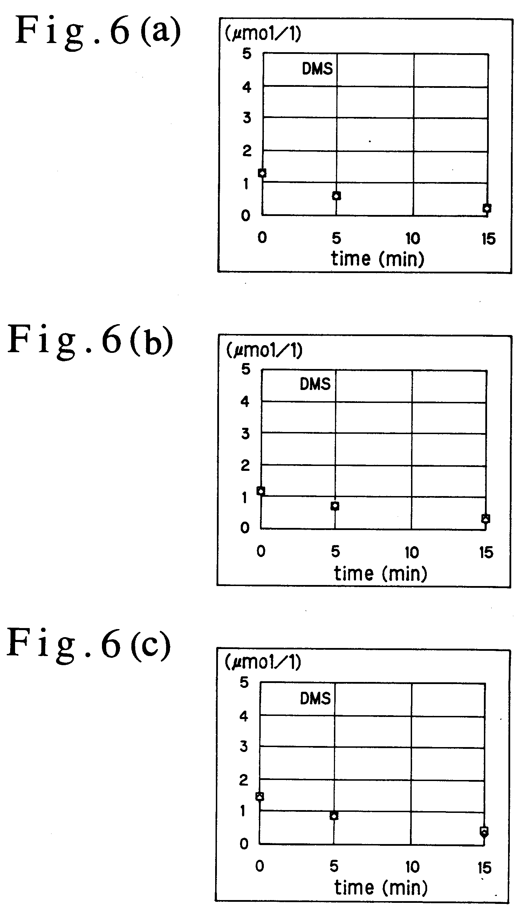

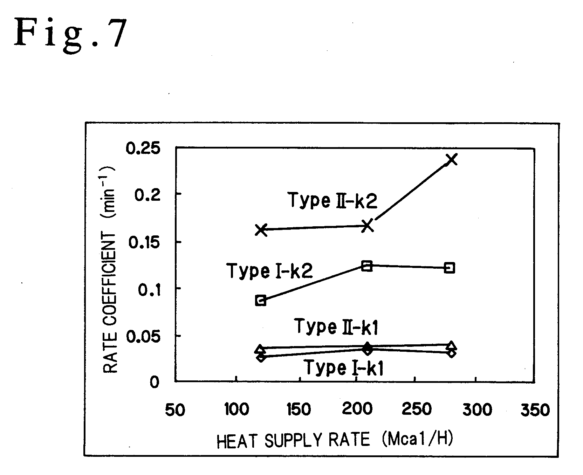

Fig. 1 is a descriptive view showing an example of a structure of a boiling apparatus used in the method of the present invention recited in claim 1. Fig. 2 is a descriptive view showing a structure of a cylindrical portion in the boiling apparatus shown in Fig. 1. Fig. 3 is a graph showing the change in the SMM concentration and the change in the DMS concentration when the initial boiling time is 0 hour in the boiling apparatus type I. Figs. 3(a), 3(b) and 3(c) show results depending on heat supply rate conditions of three grades, 280 Mcal/H, 210 Mcal/H and 120 Mcal/H respectively. Fig. 4 is a view showing DMS found and calculated values in the boiling apparatus type I. Figs 4(a), 4(b) and 4(c) show results depending on heat supply rate conditions of three grades, 280 Mcal/H, 210 Mcal/H and 120 Mcal/H respectively. Fig. 5 is a graph showing the change in the SMM concentration and the change in the DMS concentration when the initial boiling time is 0 hour in the boiling apparatus type II. Figs 5(a), 5(b) and 5(c) show results depending on heat supply rate conditions of three grades, 280 Mcal/H, 210 Mcal/H and 120 Mcal/H respectively. Fig. 6 is a view showing DMS found and calculated values in the boiling apparatus type II. Figs. 6(a), 6(b) and 6(c) show results depending on heat supply rate conditions of three grades, 280 Mcal/H, 210 Mcal/H and 120 Mcal/H respectively. Fig. 7 is a graph of comparison with respect to the relationship of the reaction rate coefficient ($k_1$) from SMM to DMS and the coefficient ($k_2$) of the DMS exhalation rate to the shape of the wort boiling kettle and the heat supply rate.

In Figs. 1 to 7, numeral 1 is a wort boiling kettle, numeral 2 a heat exchanger, numeral 2A an end, numeral 2B a cylindrical portion, numeral 3 a heating tube, and numeral 4 a spreader respectively.

Fig. 8 is a descriptive view of a wort boiling kettle which can be used in practicing the method of the present invention recited in claim 3. Fig. 9 is a descriptive view of another wort boiling kettle which can be used in practicing the method of the present invention recited in claim 3.

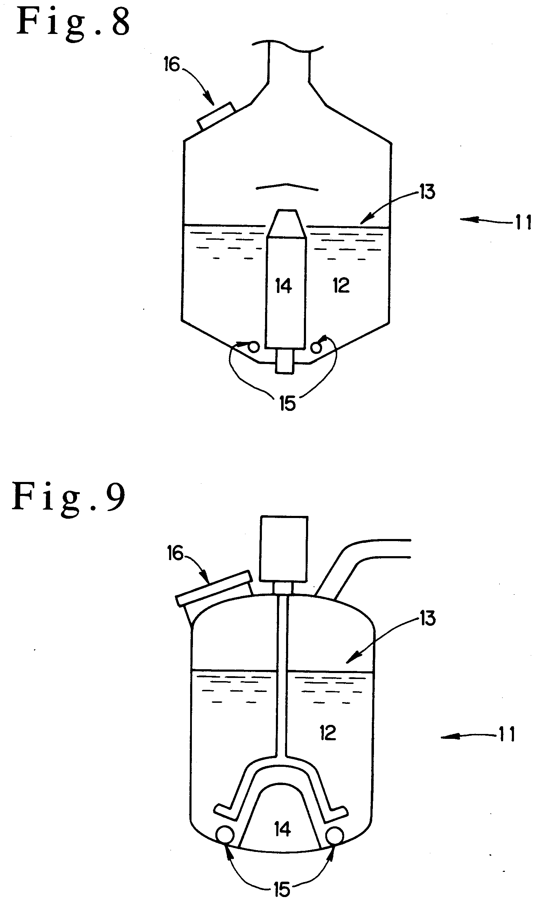

In Figs. 8 and 9, numeral 11 is a wort boiling kettle, numeral 12 a wort, numeral 13 a liquid level, numeral 14 a heater, numeral 15 an inert gas injection portion, and numeral 16 a manhole respectively.

Best Mode For Carrying Out the Invention

The present invention is described below.

As mentioned above, the present invention recited in claim 1 is to provide a method of boiling a wort which is conducted during a wort producing step in the production of beer or malt liquors, characterized in that a degree of gas-liquid contact between the wort and a gaseous phase inside of a wort boiling apparatus is improved to increase an efficiency of volatilizing and exhaling matters to be volatilized and exhaled from the wort when boiling the wort and to decrease a heat energy required when boiling the wort. The present invention recited in claim 2 is to provide the method recited in claim 1, wherein the amount of the wort flowing through a neat exchanger which is mounted within a fort boiling kettle of the wort boiling apparatus for boiling the wort in the kettle through heating is increased to improve the degree of gas-liquid contact between the wort and the gaseous phase within the apparatus.

The present inventions recited in claims 1 and 2 are characterized in that as described below, the DMS consecutive exhalation procedure is analyzed in view of the reaction rate and the DMS exhalation efficiency in the boiling step is obtained as a volatilization rate coefficient whereby the performance of separation and exhalation of volatile matters in the boiling apparatus can be evaluated.

It has been known from the past reports that the reaction behaviors of DMS in boiling the wort are mainly formation of it from SMM which is a DMS precursor and its exhalation into a gaseous phase [for example, J. Inst. Brew. 88, p. 244 (1982), Anness, B. J. and Bamforth, C. W. (1982)].

That is, SMM is not formed in boiling the wort, and an amount of dimethyl sulfoxide (DMSO) or the like converted from DMS is small. Accordingly, the following consecutive steps can be drawn.

SMM $\rightarrow$ DMS $\rightarrow$ (exhalation into a gaseous phase) (reaction of formation in a gaseous phase)

The reaction rate and the exhalation rate in the consecutive steps are assumed as described in the following equations respectively.

$$r_1 = k_1 \, [S]$$

$$r_2 = k_2 \, ([D]_L - [D]_G)$$

wherein $r_1$ is a rate of conversion from SMM to DMS ($\mu$ mol/L $\cdot$ min), $r_2$ is an exhalation rate of DMS ($\mu$ mol/L $\cdot$

min), $k_1$ is a reaction rate coefficient (l/min), $k_2$ is a volatilization rate coefficient (1/min), [S] is a concentration of SMM in a liquid phase ($\mu$ mol/L), $[D]_L$ is a concentration of DMS in a liquid phase ($\mu$ mol/L), and $[D]_G$ is a concentration of DMS in a gaseous phase ($\mu$ mol/L).

The concentration of DMS in the gaseous phase is a value obtained by calculating a gas partial pressure of DMS in the gaseous phase in terms of a concentration in the liquid phase which corresponds thereto.

In this assumption, the conversion of SMM to DMS only depends on the SMM concentration of the liquid phase, and the rate equation can be expressed by a first-order reaction. In the exhalation rate of DMS, the difference between the DMS concentrations in the gaseous phase and in the liquid phase is a driving force. Accordingly, the decrease rates of SMM and DMS are rewritten as in the following equations.

$$d[S]/dt = -k_1[S] \tag{1}$$

$$d[D]_L/dt = k_1[S] - k_2([D]_L - [D]_G) \tag{2}$$

The solution of the equation (1) is:

$$[S] / [S]_0 = \exp(-k_1 t) \tag{3}$$

wherein $[S]_0$ is an SMM concentration in a liquid phase when starting the reaction ($\mu$ mol/L).

Therefore, the equation (2) is:

$$d[D]_L/dt = k_1[S]_0 \exp(-k_1 t) - k_2[D]_L + k_2[D]_G \tag{4}$$

Since DMS in the gaseous phase is always discharged outside of the system, DMS is seemed to be approximately constant at quite a low concentration; then, the equation (4) can be treated as a first order linear differential equation. The solution thereof is:

$$[D]_L = \exp(-\int k_2 dt) [\int \{ k_1[S]_0 \exp(-k_1 t) + k_2[D]_G \} \cdot \exp(\int k_2 dt)dt + C] \tag{5}$$

wherein C is an integration constant.

The solution of the equation (5) is:

$$[D]_L = \{ k_1/(k_2 - k_1) \} [S]_0 \exp(-k_1 t) + [D]_G + C \exp(-k_2 t) \tag{5'}$$

Needless to say, since the wort concentration or the efficiency of gas-liquid contact varies before or after the boiling, the exhalation rate of volatile matters varies. What matters in the present invention is the wort during the boiling. Therefore, the time when the wort reaches boiling point is regarded as "0" hour (t=0). Thus, the concentrations of SMM and DMS at the time when the wort reaches boiling point are represented as follows respectively.

$$[S] = [S]_0$$

$$[D]_L = [D]_{L0}$$

C is calculated by inserting the above-mentioned into the equation (5)' as follows.

$$C = [D]_{L0} - [\{k_1/(k_2 - k_1)\} [S]_0 + [D]_G] \tag{6}$$

The equation (6) is inserted into the equation (5) as follows.

$$[D]_L = \{ k_1/(k_2 - k_1) \}[S]_0 \exp(-k_1 t) + [D]_G + [[D]_{L0} - \{ k_1/(k_2 - k_1) \}[S]_0 - [D]_G] \exp(-k_2 t) \tag{7}$$

In practice, the DMS concentration in the liquid phase is low in the order of $\mu$ mol per liter. Further, since the gaseous phase is always discharged as mentioned earlier, the DMS level in the gaseous phase is considered to be too low to become a gas-liquid transfer resistance.

That is, in the equation (7),

$$[D]_G \fallingdotseq 0.$$

Then, the DMS concentration in the liquid phase is provided as described in the following equation.

$$[D]_L = \{ k_1/(k_2 - k_1)\} [S]_0 [\exp(-k_1 t) - \exp(-k_2 t)] + [D]_{L0} \exp(-k_2 t) \tag{8}$$

As mentioned above, the SMM concentration and the DMS concentration in the liquid phase lead to the equations (3) and (8), respectively.

That is, the decrease rate of the SMM concentration, namely, the rate of formation by conversion from SMM to DMS is represented by the equation (3). Therefore, the logarithmic value of ($[S]/[S]_0$) is plotted against the boiling time, and the coefficient $k_1$ of the reaction rate is calculated from the linear inclination having this point interpolated therein as an approximate solution.

Further, the change in the DMS concentration, namely, the amount of DMS decreased by formation from SMM and volatilization and inhalation is represented by the equation (8). In the equation (8), $[D]_L$, $[D]_{L0}$ and $[S]_0$ are obtained by measuring the amounts of DMS and SMM in the wort, and the reaction rate coefficient $k_1$ is experimentally calculated from the above-mentioned equation (3). However, the equation (8) is non-linear, and the volatilization rate coefficient $k_2$ is not calculated by simply inserting the same. However, the approximate solution can be obtained by applying a numerical solution method such as a Runge-Kutta method.

Next, the present invention recited in claim 3 is, as described above, to provide the method recited in claim 1, wherein the wort is boiled while sparging an inert gas to improve the degree of gas-liquid contact between the wort and the gaseous phase in the wort boiling apparatus. The present invention recited in claim 4 is to provide a method of evaluating an evaporation effect of matters to be volatilized and exhaled in boiling a wort in which in the evaluation of the volatilization and exhalation effect of matters to be volatilized and exhaled from the wort by boiling the wort during the wort producing step in the production of beer or malt liquors, the wort is boiled for a predetermined period of time while sparging an inert gas, the composition of remaining matters to be volatilized and exhaled in the wort is inputted into a neural network as a gas chromatogram pattern, this pattern is compared with a gas chromatogram pattern of a composition of remaining volatile matters in the wort boiled without sparging an inert gas which pattern has been inputted in advance and is outputted by being calculated in terms of a time of boiling which is conducted without sparging an inert gas, this time of boiling corresponding to the above-mentioned boiling time, and the evaporation effect of volatile matters provided by sparging the inert gas is evaluated from the length of the boiling time obtained.

Still further, the present invention recited in claim 5 is to provide a wort boiling apparatus which is used during the wort producing step in the production of beer or malt liquors, characterized in that a means of sparging an inert gas is provided.

In the present invention recited in claim 3, the wort is boiled while sparging the inert gas in boiling the wort during the wort producing step in the production of beer or malt liquors, whereby the gas-liquid contact of the wort is accelerated, and the evaporation and separation of volatile matters in the wort are activated.

As the inert gas used herein, a nitrogen gas, a carbon dioxide gas, an argon gas, a helium gas, a neon gas and the like are taken up. An appropriate gas is selected from these and used.

In the present invention recited in claim 3, a wort obtained by filtration of a mash is boiled with a hop in a wort boiling kettle while sparging an inert gas. The shape thereof is as follows.

As shown in Fig. 8, a heater 14 for heating and boiling a wort 12 is generally attached to an inside or an outside (not shown) of a wort boiling kettle 11. The wort is boiled to a fixed rate by means of this heater 14 to thereby remove volatile matters which are undesirable to the flavor and taste of beer or the like through volatilization and exhalation. With respect to the form of this heater 14, an internal heating type or an external neating type is known.

In the present invention recited in claim 3, besides the heater 14, an inert gas jet portion 15 is mounted in any position of the wort boiling kettle 11 (near the bottom of the kettle in the drawing). The inert gas is diffused and supplied into the wort 12 therethrough to increase the gas-liquid contact area and to activate the removal of volatile matters undesirable to the flavor and taste of beer or the like through volatilization and exhalation more effectively.

The sparge of the inert gas may start at the time when the wort starts boiling or after the lapse of a predetermined time, for example, 30 minutes after the boiling.

When the evaporation effect of volatile matters through the sparge of the inert gas is evaluated in boiling the wort, the neural network algorithm indicated in claim 4 is used in the present invention recited in claim 3.

This evaluation method is described below. First, the composition of remaining volatile matters in the wort boiled in a usual manner, namely, without sparging an inert gas is measured using a gas chromatograph, and obtained as a data of change with time in the form of a chart. This is inputted into a neural network.

Meanwhile, the composition of remaining volatile matters in the wort boiled for a predetermined time while sparging the inert gas according to the present invention recited in claim 3 is measured using a gas chromatograph as mentioned above. This chromatogram pattern is inputted into the neural network, and to what part of what time in the pattern obtained through the boiling by the usual method the above-mentioned pattern is most similar is estimated using a neural network algorithm.

The thus-calculated time corresponding to the boiling time in the usual method is outputted, and this time is compared with the actual boiling time under the sparge of the inert gas to estimate the effect of evaporation of volatile matters through sparge of the inert gas.

The remaining volatile matters in the wort can be measured by a known method. In the present invention, a TCT-FID (thermal desorption cold trap injector-hydrogen flame ionization detector) method or an EP-FID [solvent (ether-pentane (2:1)] extraction - hydrogen flame ionization detector) method is the most preferable method.

Next, a method of analyzing the composition of remaining volatile matters in the wort boiled is described. A sample for analysis is collected from a sampling port of a wort boiling kettle, immediately cooled with ice, and stored at a low temperature (5°C) with sealing. When the TCT-FID method is employed as an analytical method, 7 g of sodium chloride and 10 $\mu$ l of an internal standard solution (2-heptanone 30 mg/100 ml) are added to 25 ml of a wort as a sample. The system is purged with helium at a flow rate of 100 ml/min in a constant-temperature bath of 40°C for 15 minutes, and volatile matters are adsorbed onto a TENAX trap tube.

Subsequently, this trap tube is mounted on a sample feed inlet of a gas chromatograph device, and the temperature is elevated whereby the volatile matters trapped are detached and fed from the sample feed inlet to the inside of the device. DB-5 (supplied by J & W) or the like having a micropolarity is used as a column. The conditions for trapping and detaching the volatile matters are that a cooling temperature is 100°C, a preliminary cooling time 3 minutes, a detachment temperature 250°C a detachment time 5 minutes, an injection temperature 200°C and an injection time 3 minutes respectively.

On the other hand, when the EP-FID method is employed, 0.5 ml of an internal standard solution (benzyl alcohol, 100 mg/100 ml), 60 g of sodium chloride and 150 ml of an extraction solvent [ether:pentane (2:1)] are added to 200 ml of the wort as a sample, and the extraction is conducted for 30 minutes with shaking. Subsequently, the centrifugation is conducted under the conditions of 3,000 rpm for 10 minutes, and an ether:pentane solution as a solvent is heated in warm water bath at 45°C, and the solution is concentrated to adjust the volume to 200 $\mu$ l. One microliter thereof is used as a sample, and introduced into a gas chromatograph device through a sample injection port. DB-WAX (manufactured by J & W) having a polarity is used as a column. The conditions for trapping and detaching volatile matters are the same as mentioned above.

In either of the above-mentioned cases, a hydrogen flame ionization detector (FID) is used to detect the volatile matters.

The neural network used in the present invention recited in claim 4 is one of systems in which a neural network in human beings is modeled on a computer. A model which is used frequently is one in which neurons, constituting elements in a network are bound in multiple layers and a fixed inference is outputted during the transmission of information.

In order to obtain the fixed inference result as an output of the neural network (in the present invention recited in claim 4, whether the predetermined time for which the wort is boiled while sparging an inert gas corresponds to a time for which it is boiled without sparging an inert gas), a study process (in the present invention recited in claim 4, a procedure in which the study is conducted by inputting into a computer the boiling step by the usual method without sparging the inert gas as a gas chromatogram pattern) is needed even in the model like the study of human beings.

The study is conducted such that the composition of remaining volatile matters in the wort in an optional time that lapses in the boiling by the usual method is given as an input value to the neural network in the form of a gas chromatogram pattern and "the optional time that lapses" is obtained from the output layer as an output value. After the study is conducted sufficiently, a time in which the neural network can obtain an output value along the input data is defined as a convergence of a model. The data of the boiling through sparge of an inert gas in the present invention is given to this convergence model as an input value, and it is calculated to what output value in the boiling by the usual method this corresponds.

Incidentally, in the gas chromatogram pattern, peaks except a peak having no reproducibility or a peak of a very small area are used as input signals of the neural network.

In the neural network in the present invention recited in claim 4, BrainMaker v3.1 (California Scientific Software) was used as a program, and IBM PC 750 is used as a computer.

The wort boiling apparatus of the present invention recited in claim 5 is characterized in that a means of sparging an inert gas is provided. This apparatus is the same as an ordinary wort boiling apparatus used during the wort producing step in the production of beer or malt liquors except that the means of sparging the inert gas is provided. As the means of sparging the inert gas, for example, a glass ball-type sparger can be taken up.

The present invention is illustrated more specifically by referring to the following Examples. However, the present invention is not limited thereto.

Example 1

An example of the structure of the boiling apparatus used in the method of the present invention recited in claim 1 is shown in Fig. 1. This boiling apparatus comprises a wort boiling kettle 1 for accumulating a wort to be boiled, a heater (hereinafter referred to as a "heat exchanger 2") for boiling a wort which is mounted within the kettle 1 and a spreader 4 for returning a wort bumped from the top of the heat exchanger 2 to a wort accumulated in the wort boiling kettle 1. The heat exchanger 2 comprises a conical top 2A and a cylindrical portion 2B. The structure of the cylindrical portion 2B is, as shown in Fig. 2, provided with a plurality of heating tubes 3. Hot water, a high-temperature steam or a high-temperature heat medium flowed around the heating tubes 3 to heat the wort filled within the boiling apparatus to the boiling point. The wort which reached the boiling point is bumped with the heating tubes 3, and circulated within the apparatus in the order, inside of the kettle → heat exchanger (heating tubes) → spreader → wort liquid level → bottom of the kettle. In the heat exchanger 2, the outer diameter of the cylindrical portion is 430 mm, the length of the heating tube 1,280 mm, the inner diameter of the heating tube: 34.5mm, the number of the heating tubes: 20, and the total heating area of the heating tube: 2.77 mm$^2$, respectively.

After the wort was filled in the wort boiling kettle of the boiling apparatus, the heating started, and the heat supply rate was maintained at 210 Mcal/H until the boiling started. After the boiling started, this boiling was conducted under three-grade heat supply rate conditions, 280Mcal/H, 210Mcal/H and 120 Mcal/H.

The specimen was collected before the wort temperature raised, 10 minutes before the wort reached boiling point, at the time when the wort reached boiling point, 5 minutes after the boiling point and 15 minutes after the boiling point, and the SMM concentration and the DMS concentration were measured.

The change in the SMM concentration and the change in the DMS concentration when the initial boiling time was 0 hour are shown in Figs. 3(a), 3(b) and 3(c). Figs. 3(a), 3(b) and 3(c) show the results according to the three-grade heat supply rate conditions, 280 Mcal/H, 210 Mcal/H and 120 Mcal/H.

The conversion reaction rate coefficient $k_1$ from SMM to DMS was found by four time points from 10 minutes before the boiling point on the basis of the thus-obtained SMM concentrations using the equation (3). That is, the logarithmic value of ($[S]/[S]_0$) was plotted, and the linear inclination having this point therein was calculated through the linear approximation by the least square method.

The thus-obtained conversion reaction rate coefficient $k_1$ is shown in Table 1 (type I)

Subsequently, the volatilization rate coefficient $k_2$ was found from the thus-obtained conversion reaction rate coefficient $k_1$ and the DMS measured value of the wort using the Runge-Kutta method, one of numerical solution methods.

The approximate solution of the thus-obtained volatilization rate coefficient $k_2$ is shown in Table 2 (type I). The comparison between the DMS value obtained by inserting this approximate solution into the equation (8) and the found results of the wort boiled is shown in Fig. 4. Figs. 4(a), 4(b) and 4(c) show the results according to the three-grade heat supply rate conditions, 280 Mcal/H, 210 Mcal/H and 120 Mcal/H, respectively. Both plots are coincident well with each other, and it is found that the approximate solution obtained by the numerical solution method using the equation (8) is reasonable.

Example 2

Example 1 was repeated except that the following type II was used instead of the type I as a boiling apparatus.

The difference between the boiling apparatus type II in this Example and the boiling apparatus type I in Example 1 is in the type of the heat exchanger 2. That is, the heat exchanger 2 is different in that a length of a heating tube is 804 mm, an inner diameter of the heating tube: 44.8 mm, the number of heating tubes: 24, and the total heating area of the heating tubes: 2.72 mm$^2$, respectively. In comparison with Example 1, Example 2 uses a heating portion which is thick and short.

The found values of the change in the SMM concentration and the change in the DMS concentration in the boiling apparatus type II are shown in Figs. 5(a), 5(b) and 5(c). The thus-obtained conversion reaction rate coefficient $k_1$ is shown in Table 1 (type II). Further, the volatilization rate coefficient $k_2$ was found as in Example 1. The results are shown in Table 2 (type II). The comparison between the calculated values and the found values of DMS is shown in Fig. 6. Figs. 6(a), 6(b) and 6(c) show the results according to the three-grade heat supply rate conditions, 280Mcal/H, 210Mcal/H and 120 Mcal/H. Both are quite approximate as in Example 1.

Table 1

| Type of a wort boiling kettle | Heat supply rate (Mcal/H) | $k_1$ (/min) |
|---|---|---|
| I | 280 | 0.0321 |
| I | 210 | 0.0347 |
| I | 120 | 0.0259 |

Table 1 (continued)

| Type of a wort boiling kettle | Heat supply rate (Mcal/H) | $k_1$(/min) |
|---|---|---|
| II | 280 | 0.0413 |
| II | 210 | 0.0390 |
| II | 120 | 0.0344 |

Table 2

| Type of a wort boiling kettle | Heat supply rate (Mcal/H) | $k_2$(/min) |
|---|---|---|
| I | 280 | 0.121 |
| I | 210 | 0.125 |
| I | 120 | 0.087 |
| II | 280 | 0.238 |
| II | 210 | 0.168 |
| II | 120 | 0.162 |

The results in Tables 1 and 2 were graphically represented, and the comparison (analysis) was conducted with respect to the relationship between the reaction rate coefficient ($k_1$) from SMM to DMS and the volatilization rate coefficient ($k_2$) of DMS on one hand and the shape of the wort boiling kettle and the heat supply rate on the other. The results are shown in Fig. 7.

As mentioned above, the reaction behaviors of DMS in boiling the wort were mainly the formation of DMS from SMM and the exhalation thereof into the gaseous phase. The equations of the reaction rates were established as the reaction rate coefficient ($k_1$) in the reaction of SMM $\rightarrow$ DMS and the volatilization rate coefficient ($k_2$) in the DMS $\rightarrow$ exhalation. The measured data of the residual amount of DMS in the wort was inserted therein to give the respective coefficients. In the measurement, the rate coefficients were compared with respect to the change (three grades) in the heat supply rate of the boiling apparatus [heat supply rate after the initial boiling (when the wort reached the boiling point)] and the difference in the shape of the apparatus.

The reaction rate coefficient ($k_1$) from SMM to DMS is scarcely influenced by the shape of the wort boiling kettle and the change in the heat supply rate. This is presumably because the conversion reaction depends only on the temperature (because the wort temperature is maintained at the boiling point when the heat supply rate is more than the predetermined rate). That is, it is found that the reaction rate coefficient ($k_1$) does not depend on the heat supply rate and the shape of the apparatus.

On the other hand, the volatilization rate coefficient ($k_2$) of DMS in the boiling apparatus type II is higher than that in the boiling apparatus type I, and it is increased according to the increase in the heat supply rate. Thus, it becomes clear that this coefficient highly depends on both of the shape of the wort boiling kettle and the heat supply rate. That is, the above-mentioned anticipation was supported that the higher the ($k_2$) value rises, the better the exhalation rate of the volatile matters in the boiling apparatus becomes.

Even in the state of the same heat supply rate, the volatilization rate coefficient $k_2$ in the boiling apparatus type II is higher than that in the boiling apparatus type I. That is, the coefficient of exhalation of the volatile matters is higher in the type II presumably because the number of the heating tubes is larger and the length of the tube is shorter so that the amount, per unit time, of the wort injected from the heat exchanger 2 is increased and the gaseous phase in the wort boiling kettle 1 is often brought into contact with the wort more often.

The water in the wort is evaporated with a heat supplied within the heating tube, and it becomes a steam to increase the volume, whereby the wort is injected outside of the heater. This injection stream is important to activate the mixing of the wort with flowing. Accordingly, it is not necessarily good to simply shorten the length of the heating tube, and the heating tube is required to have a heat-exchangeability to such an extent that the jet stream of the wort is kept at a fixed level.

The boiling apparatus type II has a good efficiency of DMS exhalation presumably because it provides a larger amount of gas-liquid contact than the boiling apparatus type II even at the same heat supply rate.

From the above-mentioned analytical results, the volatilization rate coefficient in the boiling apparatus was found, and the absolute value thereof was studied by comparison, with the result that the performance of separation and exhalation in the boiling apparatus could be estimated.

Therefore, according to the present inventions recited in claims 1 and 2, it is possible to relatively evaluate (evaluate superiority or inferiority by comparison) with a use of "volatilization rate coefficient", whether the apparatus per se is appropriate in the separation and exhalation of volatile matters concerning the boiling control method of the boiling apparatus, the structure of the apparatus and the like.

Example 3

Beer was produced on a pilot scale according to the usual method of brewing beer. In the wort producing step thereof, a wort filtered was boiled with a hop using a pilot wort boiling kettle 11 shown in Fig. 9.

The wort boiling kettle 11 is provided on the center of its bottom with an internal heater 14 for boiling a wort 12. In the heater 14, the surface in contact with the wort 12 has a bell-like shape, and a steam is introduced into the apparatus to heat the wort 12 and then boil it. In the case of this wort boiling kettle 11, an impeller for stirring the wort in the kettle is mounted on the upper part of the bell-like heater 4. This impeller is actuated until the wort 12 filtered is heated and reaches the boiling point, and it is stopped at the same time when the boiling starts.

The inert gas was sparged through the wort using a glass ball-type sparger (Kinoshita-type glass ball 506G, a diameter - 40 mm, particles having a diameter of from 40 to 50 $\mu$ m). The inert gas (nitrogen gas) was fed to the wort in the kettle from outside of the kettle through the sparging tube. This helped to effectively disperse the nitrogen gas in the kettle.

The sparge of the nitrogen gas started immediately after the wort started boiling, and it was continued for 90 minutes. The gas sparging conditions were 0.20 kg/cm$^2$G, 15 liters/min for 30 minutes; and 0.15 kg/cm$^2$G, 10 liters/min for 60 minutes.

The wort as a sample for analysis was collected from a sampling port soon after the gas sparging started immediately after the boiling, and it was further collected every 30 minutes. The samples collected were cooled at once, then sealed, and stored at 5°C.

The analysis of the samples collected was conducted by the TCT-FID method and the EP-FID method.

In the TCT-FID method, 7 g of sodium chloride and 10 $\mu$ l of an internal standard solution (2-heptanone, 30 mg/100 ml) were added to 25 ml of the sample, and retained in a constant-temperature bath of 40°C for 15 minutes. Volatile matters were adsorbed onto a TENAX trap tube using helium (flow rate, 100 ml/min) in a mobile phase. Subsequently, this trap tube was mounted on a sample feed inlet for a gas chromatograph, and the temperature was elevated whereby the volatile matters trapped were detached from the trap tube and fed into the apparatus from the sample feed inlet. The conditions of collection and detachment were that a cooling temperature was -100°C, a preliminary cooling for 3 minutes, a detachment temperature at 250°C, a detachment time for 5 minutes, an injection temperature at 200°C and an injection time for 3 minutes, respectively. Further, the heating was conducted at 50°C for 1 minute using, as a column, DB-5 (manufactured by J & W, 0.53 mm x 30 m, a film thickness 5 mm). Then, the heating was conducted to 250°C at a rate of temperature rise of 5°C /min, and the reaction product was kept at this temperature for 5 minutes. The temperature of the detector was 270°C.

Meanwhile, in the EP-FID method, 0.5 ml of an internal standard solution (benzyl alcohol, 100 mg/100 ml), 60 g of sodium chloride and 150 ml of an extraction solvent (ether-pentane (2:1)) were added to 200 ml of a sample, and the mixture was extracted for 30 minutes while being shaken. Subsequently, a solvent phase obtained through centrifugation (3,000 rpm, 10 minutes) was concentrated by being heated in warm water bath at 45°C, and the solution was adjusted to 200 $\mu$ l. One microliter thereof was introduced into a gas chromatograph device as a sample.

The heating was conducted at 50°C for 1 minute using DB-WAX (manufactured by J & W, 0.53 mm x 30 m, a film thickness 0.25 $\mu$ m) as a column. Then, the temperature was elevated to 250°C at a rate of temperature rise of 5°C/min, and the reaction product was kept at this temperature for 10 minutes. Further, the temperature was evaluated to 260°C at a rate of temperature rise of 10°C/min, and the product was kept at this temperature for 10 minutes. The temperature of the injection port was 220°C, and the temperature of the detector was 270°C.

The gas chromatogram patterns measured by these analytical methods were inputted in the neural network respectively, and compared and operated with the gas chromatogram pattern of the composition of remaining volatile matters in the wort boiled by the usual method, namely without sparging a nitrogen gas, this pattern having been inputted in advance, to conduct the operation. The results were outputted in terms of the time of boiling by the usual method corresponding to the time of boiling with the gas sparging. The effect of evaporation of volatile matters through the sparge of the nitrogen gas was evaluated from the length of the resulting boiling time.

Consequently, with respect to the volatile matters detected by the TCT-FID method, it was found that 30 minutes from the start-up of the boiling with the sparge of the nitrogen gas corresponded to approximately 60 minutes or one boiling by the usual method and that 60 minutes of the boiling with the sparge of the gas corresponded to approximately 90 minutes of the boiling by the usual method. Further, with respect to the volatile matters detected by the EP-FID method, the boiling with the sparge of the nitrogen gas for 30 minutes corresponded to approximately 40 minutes of the boiling by the usual method.

Example 4

Upon changing the conditions for boiling the wort in the wort producing step as described in Example 3, the sparge of the nitrogen gas started 30 minutes after the start-up of the boiling, and it was conducted for 60 minutes. The conditions for the sparge of the gas were 0.12 kg/cm$^2$G, 6 liters/min and 60 minutes. The sample after 30 minutes from the start-up of the boiling was collected after the sparge of the gas started. The other conditions were the same as in Example 3.

As a result, with respect to the volatile matters detected by the TCT-FID method, it was found that the sample after 30 minutes from the start-up of the boiling and immediately after the sparge of the nitrogen gas indicated the amount of boiling more than that of boiling for 30 minutes of the boiling by the usual method, and that the sample after 30 minutes from the start-up of the gas sparging indicated the amount of boiling corresponding to that for approximately 60 minutes of the boiling by the usual method. Further, with respect to the volatile matters detected by the EP-FID method, it was found that the boiling by sparging the nitrogen gas for 30 minutes corresponded to approximately 40 minutes of the boiling by the usual method.

From the above-mentioned results, it was found that the inert gas such as a nitrogen gas or the like was sparged in boiling the wort whereby the effects of activating the contact between the liquid phase and the gaseous phase and accelerating the evaporation and separation of the volatile matters from the wort could be expected.

Accordingly, the energy can be reduced to such an amount of heat supplied as to keep a boiling point required for the heat reaction of the wort by employing the boiling through the sparging of the inert gas according to the present inventions recited in claims 3 and 4.

The present invention recited in claim 1 can improve the efficiency of separation and exhalation in the wort boiling apparatus used to produce beer or malt liquors.

Especially, as described in claim 2, the amount of the wort sparging through the heat exchanger which is mounted within the wort boiling kettle of the wort boiling apparatus for heating and boiling the wort in the wort boiling kettle is increased to be able to improve the degree of gas-liquid contact of the wort and increase the efficiency of volatilization and exhalation of volatile matters to be volatilised from the wort in the boiling.

According to the method of boiling the wort in the present inventions recited in claims 1 and 2, it is possible to volatilize volatile matters undesirable to the flavor and taste of the product more efficiently.

Further, according to the present inventions recited in claims 3 and 4, the wort is boiled while sparging an inert gas during the wort producing step in the production of beer or malt liquors, making it possible to shorten the boiling time of the wort and conduct the consequential decrease in the amount of heat supplied without changing the boiling temperature of the wort.

Industrial applicability

As mentioned above, since the exhalation performance of volatile matters undesirable to the flavor and taste can be improved upon using the method of boiling the wort in the present invention, it is possible to decrease the heat energy required in boiling the wort and to obtain beer or malt liquors of better taste.

**Claims**

1. A method of boiling a wort which is conducted during a wort producing step in the production of beer or malt liquors, characterized in that a degree of gas-liquid contact between the wort and a gaseous phase inside of a wort boiling apparatus is improved to increase an efficiency of volatilizing and exhaling matters to be volatilized and exhaled from the wort when boiling the wort and to decrease a heat energy required when boiling the wort.

2. The method recited in claim 1, wherein the amount of the wort flowing through a heat exchanger which is mounted within a wort boiling kettle of the wort boiling apparatus for boiling the wort in the kettle through heating is increased to improve the degree of gas-liquid contact between the wort and the gaseous phase within the apparatus.

3. The method recited in claim 1, wherein the wort is boiled while sparging an inert gas to improve the degree of gas-liquid contact between the wort and the gaseous phase in the wort boiling apparatus.

4. A method of evaluating an evaporation effect of matters to be volatilized and exhaled in boiling a wort in which in the evaluation of the volatilization and exhalation effect of matters to be volatilized and exhaled from the wort by boiling the wort during a wort producing step in the production of beer or malt liquors, the wort is boiled for a predetermined period of time while sparging an inert gas, the composition of remaining matters to be volatilized and exhaled in the wort is inputted into a neural network as a gas chromatogram pattern, this pattern is compared with a gas chromatogram pattern of a composition of remaining volatile matters in the wort boiled without sparging an inert gas which pattern has been inputted in advance and is outputted by being calculated in terms of a time of boiling which is conducted without sparging an inert gas, this time of boiling corresponding to the above-mentioned boiling time, and the evaporation effect of volatile matters provided by sparging the inert gas is evaluated from the length of the boiling time obtained.

5. A wort boiling apparatus which is used during the wort producing step in the production of beer or malt liquors, characterized in that a means of sparging an inert gas is provided.

# Fig.1

# Fig.2

# Fig.3(a)

TypeⅠ

280 Mcal/H

# Fig.3(b)

TypeⅠ

210 Mcal/H

# Fig.3(c)

TypeⅠ

120 Mcal/H

# Fig.4(a)

◇ FOUND VALUES
□ CALCULATED VALUES

# Fig.4(b)

# Fig.4(c)

# Fig. 5 (a)

Type II
280 Mcal/H

# Fig. 5 (b)

Type II
210 Mcal/H

# Fig. 5 (c)

Type II
120 Mcal/H

Fig.6(a)

Fig.6(b)

Fig.6(c)

# Fig.7

# Fig.8

# Fig.9

EP 0 875 560 A1

## INTERNATIONAL SEARCH REPORT

International application No.

PCT/JP97/03563

### A. CLASSIFICATION OF SUBJECT MATTER

Int. Cl$^6$ C12C7/22

According to International Patent Classification (IPC) or to both national classification and IPC

### B. FIELDS SEARCHED

Minimum documentation searched (classification system followed by classification symbols)

Int. Cl$^6$ C12C7/22

Documentation searched other than minimum documentation to the extent that such documents are included in the fields searched

Electronic data base consulted during the international search (name of data base and, where practicable, search terms used)

WPI (DIALOG)

### C. DOCUMENTS CONSIDERED TO BE RELEVANT

| Category* | Citation of document, with indication, where appropriate, of the relevant passages | Relevant to claim No. |
|---|---|---|
| X<br>A | JP, 58-9683, A (Holstein und Kappert GmbH.),<br>January 20, 1983 (20. 01. 83)<br>& US, 4550029, A & DE, 3126714, A | 1, 3, 5<br>2, 4 |
| X<br>A | JP, 58-104602, A (K.K. Miyake Seisakusho),<br>June 22, 1983 (22. 06. 83)(Family: none) | 1, 2<br>3 - 5 |
| X<br>A | JP, 7-194362, A (Anton Steinecker Entwicklungs<br>GmbH. & Co.),<br>August 1, 1995 (01. 08. 95)<br>& EP, 605783, A1 & BR, 9305010, A | 1<br>2 - 5 |

☐ Further documents are listed in the continuation of Box C.    ☐ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | |
| "O"   document referring to an oral disclosure, use, exhibition or other means | "Y"   document of particular relevance; the claimed invention cannot be considered to involve an inventive step when the document is combined with one or more other such documents, such combination being obvious to a person skilled in the art |
| "P"   document published prior to the international filing date but later than the priority date claimed | "&"   document member of the same patent family |

| Date of the actual completion of the international search | Date of mailing of the international search report |
|---|---|
| December 26, 1997 (26. 12. 97) | January 13, 1998 (13. 01. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

20